# EUROPÄISCHE PATENTSCHRIFT

(11) **EP 1 042 422 B1**
(45) Veröffentlichungstag und Bekanntmachung des Hinweises auf die Patenterteilung: **29.09.2004**
(21) Anmeldenummer: 98965833.1
(22) Anmeldetag: 14.12.1998
(51) Int. Cl.: C09J 201/02

(54) **STRAHLENHÄRTBARER KASCHIERKLEBSTOFF UND DESSEN VERWENDUNG**
LAMINATING ADHESIVE HARDENABLE BY RADIATION AND USE OF SAME
ADHESIF POUR STRATIFIES DURCISSABLE PAR RAYONNEMENT ET SON UTILISATION

(30) Priorität: 23.12.1997 DE 19757623
(43) Veröffentlichungstag der Anmeldung: 11.10.2000
(73) Patentinhaber: Henkel Kommanditgesellschaft auf Aktien, 40589 Düsseldorf-Holthausen (DE)
(72) Erfinder: HÜBENER, Achim, D-21220 Seevetal (DE); HENKE, Günter, D-41470 Neuss (DE); DROBNIK, Michael, D-40627 Düsseldorf (DE)
(86) Internationale Anmeldenummer: PCT/EP1998/008194
(87) Internationale Veröffentlichungsnummer: WO 1999/033931

(56) Entgegenhaltungen:
- EP-A- 0 447 115
- EP-A- 0 697 449
- WO-A-93/05124
- WO-A-96/02596
- CA-A- 1 246 292
- US-A- 4 525 232
- DATABASE WPI Section Ch, Week 9716 Derwent Publications Ltd., London, GB; Class A14, AN 97-175718 XP002102410 & JP 09 040708 A (NIPPON KAYAKU KK) , 10. Februar 1997

## Beschreibung

Die Erfindung betrifft die Verwendung eines mindestens zwei Komponenten A und B enthaltenden Klebstoffs zur Herstellung von Folienverbundwerkstoffen. Weiterhin betrifft die Erfindung die Verwendung eines solchen strahlenhärtbaren Kaschierklebstoffs zur Herstellung von Folienverbundwerkstoffen.

Im Bereich der Klebstoffe, insbesondere bei der Kaschierung bahnförmiger Materialien, besteht eine zunehmende Nachfrage nach kurzen Aushärtzeiten und einer kürzeren "Response-Time" (schnelleren Gebrauchsfähigkeit) der zur Kaschierung benutzten Klebstoffe. Herkömmliche, im Markt verbreitete Systeme basieren in der Regel auf Polyurethan-, Acrylat- oder Epoxy-Bindemitteln, die über die Reaktion mit zugesetztem Härter oder durch Feuchtigkeit durch eine verhältnismäßig langsame Vernetzung aushärten. Die übliche Aushärtzeit solcher im Markt erhältlichen Systeme beträgt etwa 4 bis etwa 21 Tage. Ein solcher Zeitraum bis zur endgültigen Aushärtung und damit bis zum Erreichen der größtmöglichen Belastbarkeit der Folienverbundwerkstoffe ist jedoch in der Regel nicht wünschenswert.

Folienverbundwerkstoffe sind bei Herstellung, Verarbeitung und Gebrauch einer Reihe von Belastungen ausgesetzt, wie sie typischerweise bei anderen verklebten Materialien nicht, oder nicht in der bei Folienverbunderkstoffen vorzufmdenen Ausprägung, vorkommen. Bei der Herstellung von Folienverbundwerkstoffen werden zum Teil völlig unterschiedliche Materialien, die zu- dem noch eine unterschiedliche Oberflächenstruktur aufweisen können, miteinander verbunden. In der Regel handelt es sich dabei um bahnförmige Materialien aus beispielsweise Papier, Kunststoffen, mit Metall oder Metalloxiden, insbesondere Übergangsmetalloxiden bedampften Kunststoffolien, oder Metallfolien, insbesondere Aluminiumfolien.

Die Folienverbundwerkstoffe werden während Herstellung, Verarbeitung und Gebrauch einer Reihe von mechanischen Belastungen unterzogen, die an den die Verbindung zwischen den Materialien schaffenden Klebstoff in Bezug auf mechanische Eigenschaften des Klebstoffs hohe Anforderungen stellen. Da es sich üblicherweise bei den zu verklebenden, bahnförmigen Materialien um Materialien mit hoher Flexibilität handelt, die bei Herstellung, Verarbeitung und Gebrauch ständig Zug- und Biegebewegungen ausgesetzt sind, muß der Klebstoff über eine ausreichend hohe Flexibilität verfügen, um die dabei auftretenden Belastungen ohne Beschädigung oder Auflösung der Klebeverbindung zu überstehen.

Weiterhin muß der Klebstoff allerdings auch ein hohes Maß an Schälfestigkeit aufweisen, um Zugbelastungen senkrecht zur Folienverbundoberfläche ohne Auftrennung des Folienverbunds zu widerstehen.

Der Klebstoff muß außerdem in der Regel auch in Bezug auf Kristallisationsneigung und Verfärbung eine Reihe von Kriterien erfüllen, welche die Leistungsmerkmale von Klebstoffen für herkömmliche Verklebungen übersteigen. So muß beispielsweise bei der Verklebung transparenter Kunststoffolien gewährleistet sein, daß auch der Folienverbund eine dauerhafte Transparenz ohne Trübung durch Kristallisation aufweist. Ebenso muß der Klebstoff auch bei längerer Lagerung des Folienverbundes, beispielsweise unter UV-Bestrahlung, eine möglichst geringe Tendenz zur Bildung farbiger Nebenprodukte aufweisen.

Folienverbundwerkstoffe sollen weiterhin schon nach möglichst kurzer Zeit eine möglichst hohe Wärmestandfestigkeit aufweisen. Diese Eigenschaft ist insbesondere dann wichtig, wenn beispielsweise im Hinblick auf kürzere Produktions- und Abfüllzyklen Produkte, die noch eine erhöhte Temperatur aufweisen, mit Folienverbundwerkstoffen verpackt werden sollen. Das Merkmal der Wärmestandfestigkeit ist jedoch auch dann von Bedeutung, wenn etwa schon vom Folienverbundwerkstoff wenigstens anteilig umhüllte Materialien einer Erwärmung unterzogen werden sollen.

Ein in seiner Bedeutung steigendes Qualitätskriterium für Folienverbundwerkstoffe stellt die möglichst weitgehende Abwesenheit von Migraten dar. Unter Migraten werden niedermolekulare Bestandteile des Folienverbundwerkstoffs verstanden, die zum einen innerhalb des Verbundwerkstoffs nicht ortsfest sind, d.h., die innerhalb des Verbundwerkstoffs wandern können, und zum anderen gegebenenfalls vom Verbundwerkstoff in das vom Verbundwerkstoff umhüllte Material diffundieren können. Da solche niedermolekularen Bestandteile die körperliche Gesundheit von Lebewesen, insbesondere von Menschen beeinträchtigen können, ist es wünschenswert, möglichst migratfreie Folienverbundwerkstoffe bereitzustellen.

Durch Bestrahlung radikalisch polymerisierbare Komponenten in Klebstoffen sind bekannt. Nachteilig wirkt sich bei solchen radikalisch polymerisierbaren Klebstoffen jedoch aus, daß sie in der Regel unter inerten Bedingungen ausgehärtet werden müssen, da Luftsauerstoff als Inhibitor wirkt. Beispielsweise wird dies durch Bestrahlung des zu polymerisierenden Materials in einer Inertgasatmosphäre erreicht, wobei als Inertgase z.B. Stickstoff oder Argon in Frage kommen. Nachteilig wirkt sich bei diesem Verfahren aus, daß gegebenenfalls ein kostspieliger apparativer Aufwand betrieben werden muß, um die notwendigen Inertbedingungen zu gewährleisten.

Die Druckschrift DE-U 94 20 640.6 betrifft strahlungshärtbare Zusammensetzungen mit einem Gehalt an OH-terminierten Polyurethanen, einer Epoxyverbindung und einem Photoinitiator. Beschrieben wird eine einstufige, strahlungshärtbare Klebstoffzusammensetzung, die sowohl eine hohe Anfangshaftung als auch eine hohe Endhaftung zur Verfügung stellt, wenn sie als Kaschierklebstoff eingesetzt wird.

Die EP-A 0 688 804 beschreibt mehrkomponentige, kationisch härtende Epoxidmassen sowie Verfahren zu ihrer Härtung. Sie beschreibt kationisch härtende Epoxidmassen in verschiedenen Ausführungsformen, die als Grundbestandteile in der Regel ein Gemisch aus unter Bestrahlung Lewis- und/oder Brönsted-Säuren erzeugenden Verbindungen, kationisch polymerisierbaren, Epoxidgruppen enthaltenden Monomeren sowie mindestens einen weiteren Bestandteil ausgewählt aus der Gruppe der Flexibilisierungsmittel, Verzögerer, radikalisch polymerisierbaren Monomeren, Beschleunigern oder Modifikatoren enthalten. Als Flexibilisierungsmittel werden Alkohole und Glykole mit einem Molekulargewicht von mindestens 200 bis 20.000 g/mol genannt.

Die DE-A 43 40 949 beschreibt lichtinitiiert kationisch härtende Epoxidmassen und ihre Verwendung. Die Druckschrift beschreibt eine lichtinitiiert kationisch härtende Epoxidmasse, die mindestens einen Verzögerer, mindestens einen Beschleuniger, mindestens ein Ferrocenium-Komplexsalz und mindestens eine cycloaliphatische, Epoxidgruppen enthaltende Verbindung sowie übliche Hilfs- und Zusatzstoffe enthält.

Die den Stand der Technik darstellenden Klebstoffe weisen in der Regel den Nachteil auf, daß sie nicht alle Ansprüche erfüllen, die an einen Klebstoff zur Herstellung von Folienverbundwerkstoffen gestellt werden. So lassen sich zwar schnellhärtende Klebstoffe aus Epoxyverbindungen und Polyurethanpolyolen herstellen, deren Wärmestandfähigkeit erfüllt jedoch nicht die gestellten Anforderungen, z.B. bei der Nahrungsmittelzubereitung oder beim Sterilisieren medizinischer Geräte.

Es war daher die Aufgabe der vorliegenden Erfindung, ein Klebstoffsystem zur Herstellung von Folienverbundwerkstoffen zur Verfügung zu stellen, das den hohen Beanspruchungen, die bei der Herstellung, der Verarbeitung und dem Gebrauch solcher Folienverbundwerkstoffe entstehen, widersteht sowie eine schnelle Aushärtungszeit und hohe Scher- und Schälfestigkeiten aufweist. Weiterhin war es Aufgabe der Erfindung, einen Klebstoff zur Herstellung von Folienverbundwerkstoffen zur Verfügung zu stellen, mit dem sich Folienverbundwerkstoffe mit hoher Wärmestandfestigkeit und einem geringen Gehalt an Migraten (beispielsweise niedermolekularen Polyolen) erhalten lassen.

Gelöst wird die Aufgabe durch einen mindestens zwei Komponenten A und B enthaltenden Klebstoff, wie er im Rahmen dieses Textes unten beschrieben wird.

Gegenstand der Erfindung ist die Verwendung eines Klebstoffs gemäß Patentanspruch 1 und ein Klebstoff gemäß Patentanspruch 7

Die im Rahmen der vorliegenden Erfindung als Komponente A einsetzbaren Verbindungen weisen ein Molekulargewicht von mehr als etwa 400 auf. Beispielsweise kann die Komponente A nur eine Verbindung mit mindestens einer Vinylethergruppe enthalten, es ist jedoch ebensogut möglich, ein Gemisch aus zwei oder mehr Verbindungen mit mindestens einer Vinylethergruppe einzusetzen. Unter einem "Gemisch" wird in diesem Zusammenhang nicht ein Gemisch von unterschiedlichen Molekülen einer einzigen polymeren Verbindung verstanden, wie es aufgrund der statistischen Molekulargewichtsverteilung bei der Synthese einer polymeren Verbindung in der Regel (in Abhängigkeit von der gewählten Synthesemethode) entsteht. Der Begriff "Gemisch" bedeutet im vorliegenden Zusammenhang, daß mindestens zwei polymere Verbindungen aus verschiedenen Syntheseansätzen gemischt werden.
Die polymeren Verbindungen können sich beispielsweise in der Molekulargewichtsverteilung unterscheiden, d.h., daß die Werte für das Zahlenmittel des Molekulargewichts (Mₙ) und/oder das Gewichtsmittel des Molekulargewichts (M_{w}) sich unterscheiden. In der Regel wird es jedoch so sein, daß der Begriff "Gemisch" ein Gemisch aus mindestens zwei unterschiedlichen polymeren Verbindungen bezeichnet, die beispielsweise mit Hilfe unterschiedlicher Monomerer synthetisiert wurden.

Die als Komponente A eingesetzten polymeren Verbindungen weisen ein Polymerrückgrat auf, das durch Polykondensation, Polyaddition oder Polymerisation oder durch gleichzeitige oder aufeinanderfolgende Anwendung der genannten Methoden zum Polymeraufbau bei der Synthese eines Polymeren hergestellt wurde.

Die im Rahmen der vorliegenden Erfindung als Komponente A einsetzbaren Verbindungen weisen mindestens eine Vinylethergruppe auf, die entweder endständig, d.h., am Ende einer Polymerkette, oder seitenständig, d.h., als Seitengruppe an der Polymerkette kovalent gebunden ist. Die Verknüpfung eines Polymeren mit einer Vinylethergruppe kann auf verschiedene Arten geschehen, wobei es sich jedoch im Rahmen der vorliegenden Erfindung als vorteilhaft herausgestellt hat, wenn eine Verknüpfung der Polymerkette mit der Vinylethergruppe bzw. das Anbringen einer Vinylethergruppe an einer Polymerkette mit Hilfe mindestens einer an der Polymerkette befindlichen OH-Gruppe erfolgt.

Dementsprechend kann das Polymerrückgrat der im Rahmen der vorliegenden Erfindung als Komponente A einsetzbaren polymeren Verbindungen beispielsweise ein Polyamid, ein Polyester, ein Polyether, ein Polyacrylat, ein Polymethacrylat, ein Polycarbonat oder ein Polyurethan oder ein Copolymeres, enthaltend zwei oder mehr der genannten Polymerstrukturen, sein. Im Rahmen der vorliegenden Erfindung sind dabei solche polymeren Verbindungen bevorzugt, die vor dem Anbringen der Vinylethergruppe mindestens eine OH-Gruppe an der Polymerkette aufweisen. Hierzu zählen beispielsweise Polybutadiene oder Polyisoprene mit OH-Endgruppen. Verfahren zur Herstellung OH-Gruppen tragender Polymere der o.g. Art sind dem Fachmann aus der einschlägigen Fachliteratur für Makromolekulare Chemie bekannt und brauchen an dieser Stelle nicht weiter erörtert zu werden.

Die OH-Gruppen tragenden Polymeren lassen sich auf besonders einfache und vorteilhafte Weise mit Vinylethergruppen ausstatten. Hierzu wird üblicherweise von Monohydroxyvinylethern ausgegangen, die beispielsweise durch Umsetzung von Acetylen mit einem Polyol, vorzugsweise einem Diol, erhältlich sind. Die Monohydroxyvinylether können anschließend beispielsweise mit einem Polyisocyanat umgesetzt werden, wobei das stöchiometrische Verhältnis des Monohydroxyvinylethers zum Polyisocyanat so gewählt werden sollte, daß nach der Umsetzung pro Molekül wenigstens eine freie Isocyanatgruppe verbleibt. Im Anschluß kann die so gewonnene Verbindung mit der OH-Gruppen tragenden polymeren Verbindung umgesetzt werden, was zu einer kovalent gebundene Vinylethergruppen aufweisenden Verbindung führt.

Ebenso ist eine umgekehrte Verfahrensweise möglich, indem zunächst das OH-Gruppen tragende Polymere mit einem Polyisocyanat so umgesetzt wird, daß ein Isocyanatgruppen tragendes Polymeres entsteht und dieses Isocyanatgruppen tragende Polymere anschließend mit einem Monohydroxyvinylether umgesetzt wird.

Auf diese Weise hergestellte Polymere tragen endständig oder seitenständig eine Urethangruppe. Daher umfaßt der im Rahmen des vorliegenden Textes benutzte Begriff "Polyurethane" auch alle diejenigen polymeren Verbindungen, die auf die oben beschriebene Weise über eine Urethangruppe mit einer Vinylethergruppe verbunden sind.

Bei dem im Rahmen der vorliegenden Erfindung bevorzugt als Komponente A eingesetzten Polyurethan handelt es sich besonders bevorzugt um ein Polyester- oder Polyetherpolyurethan.

Ein solches im Rahmen der vorliegenden Erfindung besonders bevorzugt als Komponente A eingesetztes Polyesterpolyurethan läßt sich aus der Umsetzung eines Polyesterpolyols mit einem Polyisocyanat und einem Monohydroxyvinylether erhalten.

Zur Herstellung von Komponente A sind Polyesterpolyole mit einem Molekulargewicht von etwa 200 bis etwa 10.000 geeignet. So können beispielsweise Polyesterpolyole verwendet werden, die durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen. Ebenfalls als polyfunktionelle Alkohole zur Herstellung von Polyesterpolyolen geeignet sind 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol. Ebenfalls zur Herstellung der Komponente A geeignet sind Gemische aus zwei oder mehr der genannten Alkohole.

Weitere geeignete Polyesterpolyole sind durch Polykondensation herstellbar. So können difunktionelle und/oder trifunktionelle Alkohole mit einem Unterschuß an Dicarbonsäuren und/oder Tricarbonsäuren, oder deren reaktiven Derivaten, zu Polyesterpolyolen kondensiert werden. Geeignete Dicarbonsäuren sind beispielsweise Bernsteinsäure und ihrer höheren Homologen mit bis zu etwa 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure oder Gemische aus zwei oder mehr der genannten Dicarbonsäuren. Als Tricarbonsäuren sind beispielsweise Zitronensäure oder Trimellithsäure geeignet. Im Rahmen der Erfindung besonders geeignet sind Polyesterpolyole aus mindestens einer der genannten Dicarbonsäuren und Glycerin, welche einen Restgehalt an OH-Gruppen aufweisen. Besonders geeignete Alkohole sind Hexandiol, Ethylenglykol, Diethylenglykol oder Neopentylglykol oder Gemische aus zwei oder mehr davon. Besonders geeignete Säuren sind Isophthalsäure oder Adipinsäure oder deren Gemisch.

Polyesterpolyole mit hohem Molekulargewicht umfassen beispielsweise die Umsetzungsprodukte von polyfunktionellen, vorzugsweise difunktionellen Alkoholen (gegebenenfalls zusammen mit geringen Mengen an trifunktionellen Alkoholen) und polyfunktionellen, vorzugsweise difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit vorzugsweise 1 bis 3 C-Atomen eingesetzt werden. Die Polycarbonsäuren können aliphatisch, cycloaliphatisch, aromatisch und/oder heterocyclisch sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Gegebenenfalls können untergeordnete Mengen an monofunktionellen Fettsäuren im Reaktionsgemisch vorhanden sein.

Soll als Komponente A ein Polyetherpolyurethan eingesetzt werden, so ist als zugrunde liegender Polyether beispielsweise ein Umsetzungsprodukt niedermolekularer polyfunktioneller Alkohole mit Alkylenoxiden geeignet. Die Alkylenoxide weisen vorzugsweise 2 bis etwa 4 C-Atome auf. Geeignet sind beispielsweise die Umsetzungsprodukte von Ethylenglykol, Propylenglykol, den isomeren Butandiolen oder Hexandiolen mit Ethylenoxid, Propylenoxid und/oder Butylenoxid. Ferner sind auch die Umsetzungsprodukte polyfunktioneller Alkohole wie Glycerin, Trimethylolethan und/oder Trimethylolpropan, Pentaerythrit oder Zuckeralkohole, mit den genannten Alkylenoxiden zu Polyetherpolyolen geeignet. Besonders geeignet sind Polyetherpolyole mit einem Molekulargewicht von etwa 100 bis etwa 10.000, vorzugsweise von etwa 200 bis etwa 5.000. Ganz besonders bevorzugt ist im Rahmen der vorliegenden Erfindung Polypropylenglykol mit einem Molekulargewicht von etwa 300 bis etwa 2500. Ebenfalls als Polyolkomponente zur Herstellung der Komponente A geeignet sind Polyetherpolyole, wie sie beispielsweise aus der Polymerisation von Tetrahydrofuran entstehen.

Die Polyether werden in einer dem Fachmann bekannten Weise durch Umsetzung der mindestens ein reaktives Wasserstoffatom aufweisenden Startverbindung mit Alkylenoxiden, beispielsweise Ethylenoxid, Propylenoxid, Butylenoxid, Styroloxid, Tetrahydrofuran oder Epichlorhydrin oder Gemischen aus zwei oder mehr davon umgesetzt.

Geeignete Startverbindungen sind beispielsweise Wasser, Ethylenglykol, Propylenglykol-1,2 oder -1,3, Butylenglykol-1,4 oder -1,3 Hexandiol-1,6, Octandiol-1,8, Neopentylglykol, 1,4-Hydroxymethylcyclohexan, 2-Methyl-1,3-propandiol, Glycerin, Trimethylolpropan, Hexantriol-1,2,6, Butantriol-1,2,4, Trimethylolethan, Pentaerythrit, Mannitol, Sorbitol, Methylglykoside, Zucker, Phenol, Isononylphenol, Resorcin, Hydrochinon, 1,2,2- oder 1,1,2-Tris-(hydroxyphenyl)-ethan, Ammoniak, Methylamin, Ethylendiamin, Tetra- oder Hexamethylendiamin, Triethanolamin, Anilin, Phenylendiamin, 2,4- und 2,6-Diaminotoluol und Polyphenylpolymethylenpolyamine, wie sie sich durch Anilin-Formaldehydkondensation erhalten lassen.

Ebenfalls zum Einsatz als Polyolkomponente geeignet sind Polyether, die durch Polymerisate modifiziert wurden. Derartige Produkte sind beispielsweise erhältlich, indem Styrol, Acrylnitril, Vinylacetat, Acrylsäureester oder Methacrylsäureester, oder Gemische aus zwei oder mehr davon, in der Gegenwart von Polyethern polymerisiert werden.

Als Polyisocyanate zur Herstellung der Komponente A kommen beispielsweise Ethylendiisocyanat, 1,4-Tetramethylendiisocyanat, 1,6-Hexamethylendi- isocyanat (HDI), Cyclobutan-1,3-diisocyanat, Cyclohexan-1,3- und -1,4-di- isocyanat sowie Gemische aus zwei oder mehr davon, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3-oder -1,4-phenylendiisocyanat, Tetramethylxylylendiisocyanat (TMXDI), 1,3- und 1,4-Phenylendiisocyanat, 2,4- oder 2,6-Toluylendiisocyanat, Diphenylmethan-2,4-diisocyanat, Diphenylmethan-2,2'-diisocyanat oder Diphenylmethan-4,4'-diisocyanat oder Gemische aus zwei oder mehr der genannten Diisocyanate in Frage.

Ebenso im Sinne der vorliegenden Erfindung als Polyisocyanate zur Herstellung der Komponente A geeignet sind drei- oder höherwertige Isocyanate, wie sie beispielsweise durch Oligomerisierung von Diisocyanaten erhältlich sind. Beispiele für solche drei- und höherwertigen Polyisocyanate sind die Triisocyanurate von HDI oder IPDI oder deren Gemische oder deren gemischte Triisocyanurate.

Als Monohydroxyvinylether sind alle monofunktionellen Alkohole geeignet, die mindestens eine Vinylethergruppe im Molekül aufweisen. Insbesondere sind dies Verbindungen der allgemeinen Formel I

R¹-CH=CR²-O-Z-OH (I)

worin R¹ und R² unabhängig voneinander für Wasserstoff und/oder C₁₋₁₀-Alkylreste stehen, wobei C₁₋₄-Alkylreste jedoch bevorzugt sind. Vorzugsweise steht einer der beiden Reste für Wasserstoff, da ansonsten eine in der Regel unerwünschte Verringerung der Polymerisationsgeschwindigkeit der Komponente A eintritt. In einer bevorzugten Ausführungsform steht R¹ für eine Methylgruppe und R² für Wasserstoff. In einer besonders bevorzugten Ausführungsform stehen R¹ und R² für Wasserstoff. Z steht für ein zweiwertiges Radikal, abgeleitet von zweiwertigen Alkoholen. So kann Z beispielsweise für ein zweiwertiges Radikal, abgeleitet von der Gruppe der linearen Diole, beispielsweise Ethylenglykol, Propylenglykol-1,3, Butylenglykol-1,4 stehen. Ebenfalls kann Z von der Gruppe der verzweigten Diole wie Propylenglykol-1,2 oder Butylenglykol-2,3 abgeleitet sein, oder von der Gruppe der Polyalkylenglykole, beispielsweise Diethylenglykol, Triethylenglykol, und deren höheren Homologen.

Besonders bevorzugte Monohydroxyvinylether sind 4-Hydroxybutylvinylether, 4-Hydroxymethylcyclohexylmethylvinylether, 2-Hydroxyethylvinylether, Triethylenglykolmonovinylether oder Diethylenglykolmonovinylether, oder Gemische aus zwei oder mehr davon.

Als Komponente B enthält der erfindungsgemäß zu verwendende Klebstoff einen Photoinitiator, oder ein Gemisch aus zwei oder mehr Photoinitiatoren. Der Photoinitiator ist dazu in der Lage, strahlungsinduziert die Polymerisation der Vinylethergruppen zu initiieren. Insbesondere sind hierzu Photoinitiatoren geeignet, die unter Einwirkung von elektromagnetischer Strahlung, insbesondere unter Lichteinwirkung, Lewis- oder Brönstedt-Säuren erzeugen.

Als Photoinitiatoren, die unter Lichteinwirkung Lewis- oder Brönsted-Säuren erzeugen, werden im Rahmen der vorliegenden Erfindung vorzugsweise komplexe Oniumverbindungen oder Ferrocen-Komplexsalze verwendet. Grundsätzlich sind alle photosensitiven aromatischen Sulfonium- oder Iodoniumsalze zur lichtinduzierten Initierung der Polymerisation geeignet. Besonders geeignet sind hierbei die Trisarylsulfoniumhexafluoroantimonate, die Trisarylsulfoniumhexafluorophosphate, wie sie beispielsweise in den Handelsprodukten Cyracure® UVI-6974 und UVI-6990 (Hersteller: UCC, Danbury, UK) enthalten sind, oder das Bis(4,4'-Dimethylbenzyl)jodoniumtetra(pentafluorobenzyl)borat (UV CATA 200, Hersteller: Rhone-Poulenc, Saint-Fons, FR).

Besonders bevorzugt wird im Rahmen der vorliegenden Erfindung als Komponente B ein Photoinitiator ausgewählt aus der Gruppe enthaltend Triarylsulfoniumkomplexsalze, Diaryliodoniumkomplexsalze oder Ferrocen-Komplexsalze, oder Gemische aus zwei oder mehr davon, eingesetzt.

Der in Rahmen der vorliegenden Erfindung eingesetzte Photoinitiator ist dazu in der Lage, nach Bestrahlung mit Licht einer Wellenlänge von etwa 100 bis etwa 600 nm eine Polymerisation der Komponente A zu initiieren. In einer bevorzugten Ausführungsform der Erfindung erfolgt die Initiierung bei Bestrahlung mit Licht einer Wellenlänge von etwa 150 bis etwa 500 nm, beispielsweise bei etwa 200 bis etwa 480 nm.

Gegebenenfalls kann der erfindungsgemäß zu verwendende Klebstoff
c) als Komponente C eine Verbindung mit mindestens einer Vinylethergruppe, die ein Molekulargewicht von weniger als etwa 400 aufweist,
enthalten.

Gegebenenfalls kann es erwünscht sein, die Viskosität des erfindungsgemäß zu verwendenden Klebstoffs zu verringern ohne auf schwierig zu entfernende Lösemittel zurückgreifen zu müssen. In diesen Fällen bietet es sich an, dem erfindungsgemäß zu verwendenden Klebstoff als Komponente C eine Verbindung mit mindestens einer Vinylethergruppe und einem Molekulargewicht von weniger als etwa 400 zuzusetzen. Während die Komponente C für eine niedrige Viskosität des Klebstoffs sorgt, wird sie in der Regel vollständig oder wenigstens nahezu vollständig beim Aushärten in das vernetzte Polymere mit eingebunden, entsprechend dem Konzept eines "Reaktivverdünners".

Soll lediglich ein Verdünnungseffekt erzielt werden, so ist es ausreichend, als Komponente C eine Verbindung oder ein Gemisch aus zwei oder mehr Verbindungen mit nur einer Vinylethergruppe einzusetzen. Soll jedoch die Vernetzung des Klebstoffs durch die Komponente C beeinflußt werden, so ist es vorteilhaft, wenn Komponente C als "Vemetzer" wenigstens anteilig mindestens eine Verbindung mit mindestens zwei Vinylethergruppen oder ein Gemisch aus zwei oder mehr solcher Verbindungen enthält.

Zum Einsatz als Komponente C in den erfindungsgemäß zu verwendenden Klebstoffen geeignet sind beispielsweise Hydroxybutylvinylether, Triethylenglykoldivinylether, Cyclohexandimethanoldivinylether, Propylenether von Propylencarbonat (beispielsweise Rapi-Cure® PEPC, ISP Europe), Dodecylvinylether, Cyclohexandimethanolmonovinylether, Cyclohexylvinylether, Diethylenglykoldivinylether, 2-Ethylhexylvinylether, Dipropylenglykoldivinylether, Tripropylenglykoldivinylether, Hexandioldivinylether, Octadecylvinylether, Butandioldivinylether, Glycerintrivinylether, Trimethylolpropantrivinylether, Pentaerythrittetravinylether oder höhere Vinylether höherwertiger Alkohole, oder Gemische aus zwei oder mehr davon.

Der erfindungsgemäß zu verwendende Klebstoff enthält
d) als Komponente D eine Verbindung mit mindestens zwei OH-Gruppen.

Die Komponente D kann ebenfalls, vergleichbar mit dem Verhalten der Komponente C, an der Polymerisation der Komponente A teilnehmen, und in den vernetzten Klebstoff eingebaut werden. Demnach kann die Komponente D zum einen die Funktion eines "Reaktivverdünners" zur Absenkung der Viskosität des Klebstoffs, zum andern jedoch auch die Funktion eines "Vernetzers" erfüllen.

Hierzu geeignete, OH-Gruppen tragende Verbindungen sind beispielsweise Ethylenglykol, Diethylenglykol, Neopentpentylglykol, Hexandiol, Butandiol, Propylenglykol, Glycerin, Trimethyolpropan, Pentaerythrit oder Zuckeralkohole oder ein Gemisch aus zwei oder mehr davon.

Ebenfalls zum Einsatz als Komponente D geeignet sind höhermolekulare Verbindungen, beispielsweise , Polyurethanpolyole, Polycarbonatpolyole, Polyvinylacetatpolyole oder Gemische aus zwei oder mehr der genannten Polyole.

Vorzugsweise weisen die als Komponente D eingesetzten Verbindungen ein Molekulargewicht von bis zu etwa 10.000, besonders bevorzugt etwa 500 bis etwa 6.000 auf.

Besonders bevorzugt ist im Rahmen der vorliegenden Erfindung der Einsatz von Polyurethanpolyolen als Komponente D.

Eine bevorzugt im Rahmen der vorliegenden Erfindung als Komponente D eingesetzte Gruppe von Polymeren sind die Polyurethanpolyole. Unter Polyurethanpolyolen werden im Rahmen der vorliegenden Erfindung Verbindungen verstanden, die durch Polyaddition aus zwei- und/oder höherwertigen Alkoholen und Polyisocyanaten zugänglich sind. Als Polyole zur Herstellung der Polyurethane werden typischerweise Polyester und/oder Polyether mit einem Molekulargewicht von etwa 300 bis 10.000, vorzugsweise etwa 800 bis etwa 5.000 und mit mindestens zwei OH-Gruppen ausgewählt. Als Polyester zur Herstellung der im Rahmen der vorliegenden Erfindung einsetzbaren Polyurethane sind alle OH-Gruppen terminierten Polyester geeignet, die sich mit einem mindestens difunktionellen Isocyanat unter Kettenverlängerung umsetzen lassen. Hierzu zählen beispielsweise die oben genannten Polyester.

Weitere Dihydroxyverbindungen, die für die Darstellung der als Polyolkomponente zur Herstellung der Polyurethane einsetzbaren Polyester verwendbar sind, sind beispielsweise Butandiol-1,3, Butandiol-1,4, Butandiol-2,3, 2,2-Diethylpropan-1,3-diol, 2-Methyl-2-propylpropan-1,3-diol, isomere Octandiole, ethylenisch ungesättigte, zweiwertige Verbindungen wie Heptendiol, Octendiol sowie zweiwertige Verbindungen mit einem Gehalt an N oder S Heteroatomen, beispielsweise Diethylenglykol, Triethylenglykol, Thioethylenglykol, Diethanolamin oder N-Methyldiethanolamin, oder Gemische aus zwei oder mehr davon.

Die Diole werden in der Regel zur Herstellung der Polyurethane mit entsprechenden, mindestens difunktionellen Isocyanaten umgesetzt. Die im Rahmen der vorliegenden Erfindung eingesetzten Isocyanate können aliphatisch oder aromatisch sein und etwa 4 bis etwa 40 Kohlenstoffatome aufweisen. Beispiele für geeignete Isocyanate sind Hexamethylendiisocyanat (HDI), 1,8-Octandiisocyanat, 1,10-Decandiisocyanat, Diisocyanate wie sie beispielsweise aus der Dimerisierung von Fettsäuren und entsprechender anschließender Funktionalisierung erhältlich sind, Phenylendiisocyanat-1,4, 2,4- und 2,6-Toluoldiisocyanat und deren Gemische, 1,5-Naphtylendiisocyanat, 2,2'-, 2,4'- oder 4,4'-Diphenylmethandiisocyanat (MDI) oder Gemische aus zwei oder mehr davon. Tetramethylxylylendiisocyanat (TMXDI), Isophorondiisocyanat (IPDI), Cyclobutan-1,3-diisocyanat, Cyclohexan-1,3- und -1,4-diisocyanat, 2,4- und 2,6-Hexahydrotoluylendiisocyanat, Hexahydro-1,3- oder -1,4-phenylendiiso-cyanat, 2,2'-Diphenylmethan-diisocyanat oder 4,4'-Diphenylmethan-diisocyanat oder Gemische aus zwei oder mehr der genannten Diisocyanate. Ebenso im Sinne der vorliegenden Erfindung als Isocyanat zur Herstellung des in Komponente A enthaltenen Polyurethans einsetzbar sind drei- oder höherwertige Polyisocyanate, wie sie beispielsweise durch Oligomerisierung von Diisocyanaten erhältlich sind. Beispiele für solche drei- und höherwertigen Polyisocyanate sind die Triisocyanurate von HDI oder IPDI oder deren gemischte Triisocyanurate.

In der Regel wird das durchschnittliche Molekulargewicht der als Komponente D eingesetzten Polymeren einen Wert von 400 nicht unterschreiten. Da Polymere in der Regel, in Abhängigkeit von der gewählten Synthesemethode, eine statistische Molekulargewichtsverteilung aufweisen, bezieht sich der Begriff "durchschnittliches Molekulargewicht" auf das Zahlenmittel (Mₙ) des Molekulargewichts der in der Komponente A enthaltenen Polymeren. Dies schließt mit ein, daß auch einzelne polymere Moleküle enthalten sein können, deren Molekulargewicht unterhalb des angegebenen Wertes von 500 liegt.

Gegebenenfalls kann der erfindungsgemäß zu verwendende Klebstoff
e) als Komponente E eine Verbindung mit mindestens einer Epoxygruppe
enthalten.

Zu den im Rahmen der vorliegenden Erfindung als Komponente E einsetzbaren Verbindungen mit mindestens einer Epoxygruppe zählen beispielsweise die cycloaliphatischen Epoxide. Beispiele für cycloaliphatische Epoxide sind Bis(3,4-epoxycyclohexylmethyl)oxalat, Bis(3,4-epoxycyclohexylmethyl)adipat, Bis(3,4-epoxy-6-methylcyclohexylmethyl)adipat und/oder Bis(3,4-epxoycyclo-hexylmethyl)pimelat.

Ebenso geeignet sind 3,4-Epoxycyclohexylmethyl-3,4-epoxycyclohexancarboxy-late, beispielsweise 3,4-Epoxycyclohexylmethyl-3,4-epoxycyclohexancarbonsäure, 3,4-Epoxy-1-methylcyclohexylmethyl-3,4-epoxy-1-methylcyciohexancarbonsäure, 6-Methyl-3,4-epoxycyclohexylmethyl-6-methyl-3,4-epoxycyclo-hexancarbonsäure, 3,4-Epoxy-2-methylcyclohexylmethyl-3,4-epoxy-2-methylcyclo-hexancarbonsäure, 3,4-Epoxy-5-methylcyclohexylmethyl-3,4-epoxy-5-methylcyclohexancarbonsäure und dergleichen.

Weitere geeignete Epoxide, die sich im Rahmen der vorliegenden Erfindung einsetzen lassen, umfassen Glycidylether wie sie aus mehrwertigen Phenolen erhältlich sind, beispielsweise Diglycidylether von 2,2'-Bis(2,3-epoxypropoxyphenol)-propan.

Die Komponente E enthält in der Regel mindestens etwa 5 Gew.-% einer Verbindung mit nur einer Epoxygruppe. Der Anteil von Verbindungen mit zwei oder mehr Epoxygruppen liegt entsprechend bei etwa 5 bis etwa 50 Gew.-%, wobei der Anteil an tri- und höherfunktionellen Epoxiden bei etwa 5 bis etwa 30 Gew.-% liegt.

Zusätzlich zu den Komponente A, B, C, D und E kann der erfindungsgemäß zu verwendende Klebstoff als Komponente F noch mindestens eine Verbindung oder ein Gemisch aus zwei oder mehr Verbindungen enthalten, die eine kationisch polymerisierbare funktionelle Gruppe aufweisen, die keine Vinylethergruppe und keine Epoxygruppe ist. Beispiele hierfür sind Olefine, Vinylarene, insbesondere Styrol, und heterocyclische Verbindungen wie Ether, Thioether, Ester oder Acetale. Bevorzugt ist im Rahmen der vorliegenden Erfindung Styrol.

Die erfindungsgemäß zu verwendenden Klebstoffe können weiterhin Zusatzstoffe enthalten, zu denen beispielsweise Beschleuniger, Farbstoffe. Pigmente, Füllstoffe, Verstärkungsmittel, Thixotropiermittel, Initiatoren, Stabilisatoren, Inhibitoren oder Haftvermittler zählen. Beschleuniger werden in der Regel dazu eingesetzt, den Polymerisationsablauf zu beschleunigen. Dies kann entweder dadurch geschehen, daß die unter Einfluß von Strahlung ablaufende Initiierungsreaktion beschleunigt wird oder indem die Polymerisation selbst, das heißt die Anlagerung der einzelnen Monomeren aneinander, unterstützt wird.

Der erfindungsgemäß zu verwendende Klebstoff enthält die Komponenten A, B und D sowie gegebenenfalls C, E und/oder F, sowie gegebenenfalls vorhandene Zusatzstoffe, in unterschiedlichen Mengenverhältnissen. Alle Mengenangaben beziehen sich dabei auf den gesamten Klebstoff.

Komponente A hat am Klebstoff in der Regel einen Anteil von etwa 1 Gew.-% bis zu etwa 99,9 Gew.-%, wobei ein Anteil von etwa 1 Gew.-% bis etwa 99 Gew.-% bevorzugt ist.

Komponente B wird in der Regel in einem Anteil von etwa 0,1 bis etwa 8 Gew.-% im Klebstoff eingesetzt, wobei ein Anteil von etwa 1 Gew.-% bis etwa 5 Gew.-%, insbesondere etwa 2 Gew.-% bis etwa 4 Gew.-%, bevorzugt ist.

Komponente C wird gegebenenfalls in einem Anteil von bis zu etwa 40 Gew.-% im Klebstoff eingesetzt, wobei ein Anteil von etwa 5 Gew.-% bis etwa 30 Gew.-% bevorzugt ist.

Komponente D wird in einem Anteil von bis zu etwa 40 Gew.-% im Klebstoff eingesetzt, wobei ein Anteil von etwa 5 Gew.-% bis etwa 20 Gew.-% bevorzugt ist.

Komponente E wird gegebenenfalls in einem Anteil von bis zu etwa 40 Gew.-% im Klebstoff eingesetzt, wobei ein Anteil von etwa 10 Gew.-% bis etwa 30 Gew.-% bevorzugt ist.

Komponente F wird gegebenenfalls in einem Anteil von bis zu etwa 40 Gew.-% im Klebstoff eingesetzt, wobei ein Anteil von etwa 10 Gew.-% bis etwa 30 Gew.-% bevorzugt ist.

Die im erfindungsgemäß zu verwendenden Klebstoff gegebenenfalls einzusetzenden Zusatzstoffe können insgesamt in einer Menge von bis zu etwa 20 Gew.-% vorliegen.

Ebenfalls Gegenstand der Erfindung ist ein Klebstoff, enthaltend drei Komponenten A, B und D, gemäß Patentanspruch 7.

In einer weiteren bevorzugten Ausführungsform enthält der erfindungsgemäße Klebstoff etwa
- 50 bis 80 Gew.-% Komponente A,
- 2 bis 4 Gew.-% Komponente B und
- 18 bis 46 Gew.-% Komponente D.

Gegebenenfalls kann der Klebstoff noch mindestens eine weitere Komponente, ausgewählt aus den Komponenten C, E und F sowie den Zusatzstoffen enthalten, wie sie im Rahmen des vorliegenden Textes definiert sind.

Die erfindungsgemäße Klebstoffzusammensetzung wird üblicherweise durch Vermischung der jeweils genannten Komponenten hergestellt. Auftrag auf die zu verklebenden Folien kann mit üblicherweise für solche Zwecke eingesetzten Maschinen, beispielsweise mit herkömmlichen Laminiermaschinen erfolgen. Besonders geeignet ist der Auftrag der Klebstoffe im flüssigen Zustand auf eine zu einem Laminat zu verklebende Folie. Die so mit dem Klebstoff beschichtete Folie wird dann anschließend mit einer weiteren Folie durch bekannte Techniken zusammengeführt, und anschließend in eine Bestrahlungszone überführt, in der durch Bestrahlung mit ultravioletter Strahlung die Polymerisationsreaktion, das heißt die Vernetzung der einzelnen Komponenten, initiiert wird. Gegebenenfalls kann die mit dem Klebstoff beschichtete Folie auch bestrahlt werden, bevor die mit dem Klebstoff versehene Fläche mit einer zweiten Folie zusammengefügt wird. Dies setzt allerdings voraus, daß das Zusammenfügen mit der zweiten Folie zu einem Zeitpunkt erfolgt, zu dem die Polymerisation des Klebstoffs, das heißt das Aushärten, noch nicht vollständig abgeschlossen ist. der Klebstoff muß zu diesem Zeitpunkt noch genügen Adhäsion entwickeln können, damit die zweite Bahn haftet. Diese Vorgehensweise ist insbesondere dann angezeigt, wenn zwei Folien miteinander verklebt werden sollen, die nicht für eine die Initiierung der Polymerisation erforderliche Strahlung durchlässig sind.

Der beschriebene Verklebungs- und Laminiervorgang kann mehrfach wiederholt werden, so daß Laminate hergestellt werden können, die aus mehr als zwei verklebten Schichten bestehen.

Zu den verklebbaren Materialien zählen beispielsweise Papier, Cellulosehydrat, Kunststoffe wie Polyethylen, Polypropylen, Polyethylenterephthalat, Polyvinylchlorid, Copolymere von Vinylchlorid und Vinylidenchlorid, Copolymere von Vinylacetatolefinen, Polyamide, oder Metallfolien, beispielsweise aus Aluminium, Blei oder Kupfer.

## Patentansprüche

1. Verwendung eines Klebstoffs, enthaltend mindestens drei Komponenten A, B und D zur Herstellung eines Folienverbundwerkstoffs, wobei
a) als Komponente A eine Verbindung mit mindestens einer Vinylethergruppe, die ein Molekulargewicht von mehr als 400 aufweist,
b) als Komponente B ein Photoinitiator, der nach Bestrahlung mit Licht einer Wellenlänge von 100 bis 600 nm eine Polymerisation der Komponente A initiiert,
d) als Komponente D eine Verbindung mit mindesten zwei OH-Gruppen, ausgewählt aus der Gruppe bestehend aus Polycarbonatpolyolen, Polyvinylacetatpolyolen, Polyurethanpolyolen, Ethylenglykol, Diethylenglykol, Neopentylglykol, Hexandiol, Butandiol, Propylenglykol, Glycerin, Trimethylolpropan, Pentaerythrit oder Zuckeralkohole oder ein Gemisch aus zwei oder mehr davon,
enthalten ist.

2. Verwendung nach Anspruch 1, **dadurch gekennzeichnet, daß** als Komponente B ein Photoinitiator ausgewählt aus der Gruppe enthaltend Triarylsulfoniumkomplexsalze, Diaryliodoniumkomplexsalze und Ferrocen-Komplexsalze, enthalten ist.

3. Verwendung nach Anspruch 1 oder 2, **dadurch gekennzeichnet, daß** der Klebstoff
c) als Komponente C eine Verbindung mit mindestens einer Vinylethergruppe, die ein Molekulargewicht von weniger als 400 aufweist,
enthält.

4. Verwendung nach einem der Ansprüche 1 bis 3 **dadurch gekennzeichnet, daß** der Klebstoff
e) als Komponente E eine Verbindung mit mindestens einer Epoxygruppe
enthält.

5. Verwendung nach einem der Ansprüche 1 bis 4, **dadurch gekennzeichnet, daß** der Klebstoff Komponente D in einem Anteil von bis zu etwa 40 Gew.-% enthält.

6. Verwendung nach einem der Ansprüche 1 bis 5, **dadurch gekennzeichnet, daß** der Klebstoff
- 10 bis 96 Gew.-% der Komponente A
- 2 bis 4 Gew.-% der Komponente B und
- 2 bis 30 Gew.-% der Komponente C
enthält.

7. Klebstoff, enthaltend drei Komponenten A, B und D, wobei
a) als Komponente A eine Verbindung mit mindestens einer Vinylethergruppe, die ein Molekulargewicht von mehr als 400 aufweist, und
b) als Komponente B ein Photoinitiator, der nach Bestrahlung mit Licht einer Wellenlänge von 100 bis 600 nm eine Polymerisation der Komponente A initiiert, und
d) als Komponente D eine Verbindung mit mindestens zwei OH-Gruppen, ausgewählt aus der Gruppe bestehend aus Polycarbonatpolyolen, Polyvinylacetatpolyolen, Polyurethanpolyolen, Ethylenglykol, Neopentylglykol, Hexandiol, Butandiol, Propylenglykol, Glycerin, Trimethylolpropan, Pentaerythrit oder Zuckeralkohole oder ein Gemisch aus zwei oder mehr davon,
enthalten ist.

8. Klebstoff nach Anspruch 7, **dadurch gekennzeichnet, daß**
- 50 bis 80 Gew.-% Komponente A,
- 2 bis 4 Gew.-% Komponente B und
- 18 bis 46 Gew.-% Komponente D
enthalten ist.

## Claims

1. The use of an adhesive containing at least three components A, B and D for the production of a film laminate,
a) component A being a compound containing at least one vinyl ether group which has a molecular weight of more than 400,
b) component B being a photoinitiator which initiates a polymerization of component A after exposure to light with a wavelength of 100 to 600 nm and
d) component D being a compound containing at least two OH groups selected from the group consisting of polycarbonate polyols, polyvinyl acetate polyols, polyurethane polyols, ethylene glycol, diethylene glycol, neopentyl glycol, hexanediol, butanediol, propyleneglycol, glycerol, trimethylolpropane, pentaerythritol or sugar alcohols or a mixture of two or more thereof.

2. The use claimed in claim 1, **characterized in that** a photoinitiator selected from the group containing triaryl sulfonium complex salts, diaryl iodonium complex salts and ferrocene complex salts is present as component B.

3. The use claimed in claim 1 or 2, **characterized in that** the adhesive contains
c) a compound with at least one vinyl ether group and a molecular weight of less than 400 as component C.

4. The use claimed in any of claims 1 to 3, **characterized in that** the adhesive contains
d) a compound containing at least one epoxy group as component E.

5. The use claimed in any of claims 1 to 4, **characterized in that** the adhesive contains component D in a quantity of up to about 40% by weight.

6. The use claimed in any of claims 1 to 5, **characterized in that** the adhesive contains
- 10 to 96% by weight of component A,
- 2 to 4% by weight of component B and
- 2 to 30% by weight of component C.

7. An adhesive containing three components A, B and D,
a) component A being a compound with at least one vinyl ether group and a molecular weight of more than 400,
b) component B being a photoinitiator which initiates a polymerization of component A after exposure to light with a wavelength of 100 to 600 nm and
d) component D being a compound containing at least two OH groups selected from the group consisting of polycarbonate polyols, polyvinyl acetate polyols, polyurethane polyols, ethylene glycol, neopentyl glycol, hexanediol, butanediol, propyleneglycol, glycerol, trimethylolpropane, pentaerythritol or sugar alcohols or a mixture of two or more thereof.

8. An adhesive as claimed in claim 7, **characterized in that** it contains
- 50 to 80% by weight of component A,
- 2 to 4% by weight of component B and
- 18 to 46% by weight of component D.

## Revendications

1. Utilisation d'un d'adhésif contenant au moins trois composants A, B et D pour la fabrication d'un matériau composite en feuille, l'adhésif contenant
a) à titre de composant A, un composé comprenant au moins un groupe d'éther vinylique qui présente un poids moléculaire supérieur à 400 ;
b) à titre de composant B, un photoinitiateur qui, après exposition à de la lumière possédant une longueur d'onde de 100 à 600 nm, déclenche une polymérisation du composant A ;
d) à titre de composant D, un composé comprenant au moins deux groupes OH, choisi parmi le groupe constitué par des polycarbonatepolyols, des polyvinylacétatepolyols, des polyuréthanepolyols, l'éthylèneglycol, le diéthylèneglycol, le néopentylglycol, l'hexanediol, le butanediol, le propylèneglycol, le glycérol, le triméthylolpropane, le pentaérythritol ou des alcools de sucre, ou encore un mélange de deux desdits éléments précités ou plus.

2. Utilisation selon la revendication 1, **caractérisée en ce que** l'adhésif contient, à titre de composant B, un photoinitiateur choisi parmi le groupe contenant des sels de complexes de triarylsulfonium, des sels de complexes de diaryliodonium et des sels de complexes de ferrocène.

3. Utilisation selon la revendication 1 ou 2, **caractérisée en ce que** l'adhésif contient
c) à titre de composant C, un composé comprenant au moins un groupe d'éther vinylique qui présente un poids moléculaire inférieur à 400.

4. Utilisation selon l'une quelconque des revendications 1 à 3, **caractérisée en ce que** l'adhésif contient
e) à titre de composant E, un composé comprenant au moins un groupe époxy.

5. Utilisation selon l'une quelconque des revendications 1 à 4, **caractérisée en ce que** l'adhésif contient le composant D en une fraction s'élevant jusqu'à environ 40 % en poids.

6. Utilisation selon l'une quelconque des revendications 1 à 5, **caractérisée en ce que** l'adhésif contient
- le composant A, à concurrence de 10 à 96 % en poids
- le composant B à concurrence de 2 à 4 % en poids, et
- le composant C à concurrence de 2 à 30 % en poids.

7. Adhésif contenant trois composants A, B et D, l'adhésif contenant
a) à titre de composant A, un composé comprenant au moins un groupe d'éther vinylique qui présente un poids moléculaire supérieur à 400 ;
b) à titre de composant B, un photoinitiateur qui, après exposition à de la lumière possédant une longueur d'onde de 100 à 600 nm, déclenche une polymérisation du composant A ; et
d) à titre de composant D, un composé comprenant au moins deux groupes OH, choisi parmi le groupe constitué par des polycarbonatepolyols, des polyvinylacétatepolyols, des polyuréthanepolyols, l'éthylèneglycol, le néopentylglycol, l'hexanediol, le butanediol, le propylèneglycol, le glycérol, le triméthylolpropane, le pentaérythritol ou des alcools de sucre, ou encore un mélange de deux desdits éléments précités ou plus.

8. Adhésif selon la revendication 7, **caractérisé en ce qu'**il contient
- le composant A, à concurrence de 50 à 80 % en poids
- le composant B à concurrence de 2 à 4 % en poids, et
- le composant C à concurrence de 18 à 46 % en poids.
